# EUROPEAN PATENT APPLICATION

(11) **EP 4 607 655 A1**
(43) Date of publication of application: **27.08.2025**
(21) Application number: 24315058.8
(22) Date of filing: 23.02.2024
(51) Int. Cl.: H01M 10/6567, H01M 10/613, B65D 51/16, H01M 10/625

(54) **VENTING AND DRYING UNIT AND IMMERSION-COOLED BATTERY SYSTEM**

(71) Applicant: MANN+HUMMEL GmbH, 71636 Ludwigsburg (DE)
(72) Inventor: Singh, Harsh, 35200 Rennes (FR); Haller, Andreas, 71636 Ludwigsburg (DE); Kravanja, Axel, 71636 Ludwigsburg (DE); Preaubert, Gilles, 53000 Laval (FR)
(74) Representative: Mann + Hummel Intellectual Property

(57) **Abstract**

A venting and drying unit (1) for attachment to a coolant reservoir (100) includes a venting element (2) configured to provide an air exchange between the coolant reservoir (100) and an environment for pressure compensation, and an air drying element (3) including a housing (4) in which a drying agent is arranged, the housing (4) including an air inlet (5), an air outlet (6), and an aperture (7). The venting element (2) is further configured to detachably connect to the air drying element (3), cover the housing (4) of the air drying element (3), and allow ambient air to flow in from outside through the venting element (2) into the housing (4) of the air drying element (3) through the air inlet (5) so that the ambient air is dehumidified by the drying agent.

## Description

### Technical Field

The invention relates to a venting and drying unit for attachment to a coolant reservoir, including a venting element, via which an air exchange between the coolant reservoir and the environment is possible for the purpose of pressure compensation, and an air drying element, which includes a housing in which a drying agent is arranged. The invention also relates to the use of such a venting and drying unit for venting and dehumidifying a coolant reservoir in an immersion-cooled battery system.

### Background Art

Battery systems, which are widely used in electromobility today, include a large number of battery cells arranged in an outer housing. Malfunctions of the battery system can sometimes lead to uncontrolled heat generation in the battery system. In addition, the regular charging of such battery systems is also accompanied by heat generation in the individual battery cells, whereby the faster the charging process takes place, the more heat is generated. Excessive or even uncontrolled heat development can cause massive damage to the battery system. For this reason, corresponding battery systems are cooled.

In order to compete with combustion systems, the automotive industry is endeavoring to shorten the charging times for battery systems. Accordingly, there is a need for improved cooling systems to efficiently dissipate the large amounts of heat generated during the shorter and shorter charging processes in the battery systems. While battery systems have long been cooled indirectly with the aid of cooling plates through which a coolant flows and which are arranged underneath the battery cells, a process known as immersion cooling has also been used in recent times. In this process, a coolant is introduced into the housing of the battery system and passed through it in such a way that the coolant flows directly around the individual battery cells and immerses them in it. Due to the direct contact between the coolant and the individual battery cells and the large contact surface, the heat is removed very efficiently, but at the same time special requirements must be placed on the quality of the coolant in order to ensure safe operation of the battery system. In addition to the correct temperature control, the moisture content of the coolant is a key criterion. If the coolant contains too much water, there is a risk of a short circuit within the battery system due to the increased electrical conductivity of the coolant. In addition, the individual battery cells are exposed to an increased risk of corrosion due to condensed water.

Temperature-related pressure fluctuations in the coolant reservoir can make it necessary to equalize the pressure between the coolant reservoir and the environment. For this purpose, it is known to provide venting elements directly on the battery housing of the battery system. However, there is a risk that, in the course of pressure compensation, air flowing into the coolant reservoir from outside is loaded with moisture, which is introduced into the coolant and increases its moisture content in an undesirable manner. For the reasons mentioned above, the moisture introduced must be removed from the coolant.

Devices are already known in the prior art that can be used to remove moisture from the coolant of an immersion-cooled battery system. For example, US 2020/0058975 A1 describes a battery system including a treatment circuit in which the coolant is tempered and freed from impurities. In addition, the treatment circuit includes a drying element that is used to remove water from the coolant. The efficiency of such dehumidification mechanisms is considered to be in need of improvement.

### Summary

It is the object of the present invention to provide an alternative, particularly compact and efficient venting and drying system for attachment to a coolant reservoir, in particular to a coolant reservoir of an immersion-cooled battery system.

This problem is solved by a venting and drying unit according to patent claim 1.

Advantageous embodiments and further developments of the invention are the subject of the dependent claims.

According to patent claim 1, the invention is a venting and drying unit for attachment to a coolant reservoir, the venting and drying unit including a venting element configured to provide an air exchange between the coolant reservoir and an environment for pressure compensation, and an air drying element including a housing in which a drying agent is arranged, the housing including an air inlet, an air outlet, and an aperture. The venting element is further configured to detachably connect to the air drying element, cover the housing of the air drying element, and allow ambient air to flow in from outside through the venting element into the housing of the air drying element through the air inlet so that the ambient air is dehumidified by the drying agent. The air drying element is configured to allow the dehumidified ambient air to exit the housing through the air outlet into the coolant reservoir through the aperture.

In other words, the invention proposes a venting and drying unit in which a venting element and an air drying element are detachably connected to one another to form a unit, so that ambient air flowing in from outside through the venting element for the purpose of pressure compensation is inevitably first passed through the immediately adjacent air drying element and dehumidified there before it finally enters the coolant reservoir. In this way, moisture is essentially completely removed from the ambient air as soon as it enters through the venting element, which significantly reduces the risk of moisture being introduced into the coolant via the supplied ambient air. In addition, the circulation of air into and out of the coolant reservoir is facilitated by the immediate removal of moisture from the air. The venting and drying unit according to the invention is characterized in particular by the fact that the venting and dehumidification functions are combined in a compact, modular unit. It thus differs from solutions known from the prior art, in which the venting and drying elements are designed separately and arranged at a distance from each other.

According to the invention, it is provided that the venting element is designed as a venting cap which is detachably connected to the air drying element in the position of use of the unit. The venting cap is shaped such that it covers the housing of the air drying element in which the drying agent is arranged. The venting cap has at least one opening that can be controlled, for example, via a spring-loaded valve, through which air can enter the venting and drying unit from outside. Ambient air supplied in this way inevitably enters, through an air inlet, the housing of the air drying element arranged inside the venting cap, where moisture is removed from it through interaction with the drying agent, for example a silica gel, which absorbs the moisture contained in the air. The air dehumidified in this way then exits through the air outlet formed in the housing and enters the coolant reservoir through an aperture formed in the air drying element. In this way, the introduction of moisture into the coolant via ambient air supplied from outside can be essentially completely prevented. The venting and drying unit according to the invention is thus characterized by a particularly high efficiency combined with a very compact design.

According to one embodiment of the invention, the venting and drying unit may include a connecting plate configured to connect to the coolant reservoir, and to detachably connect to the venting element and the air drying element. A connecting plate can thus be provided, which on the one hand can be detachably connected to the coolant reservoir and to which on the other hand the unit including the venting and air drying element can be detachably fastened. The connecting plate can, for example, be attached to the coolant reservoir by means of a bayonet connection. Similarly, the unit including the venting and air drying element can be connected to the connecting plate via a bayonet connection.

It may be provided that the venting and drying unit may include a valve configured to seal off the air drying element from the coolant reservoir when a predetermined coolant level is exceeded, the valve including a liquid-permeable receptacle formed on the connecting plate, and a ball arranged in the liquid-permeable receptacle and configured to act as a float to seal off the aperture in the air drying element when the predetermined coolant filling level is exceeded. In order to maintain the functionality of the air drying element, it is very important that the drying agent arranged in the housing of the air drying element does not come into direct contact with the coolant. However, depending on the temperature of the coolant, its expansion and thus the coolant level in the coolant reservoir can vary and, in particular, increase significantly. In order to prevent coolant from entering the housing of the air drying element in this case, the invention provides a valve in the form of a float valve, by means of which the housing of the air drying element can be sealed off from the coolant reservoir when a predetermined coolant level is exceeded. For this purpose, a ball is arranged in a liquid-permeable receptacle formed on the connecting plate, which floats on the coolant surface as the coolant level rises and is lifted by it until it is finally pressed against the aperture which is formed in the air drying element and acts as a valve seat, closing it. When the coolant level drops, the ball releases the aperture again. A venting and drying unit equipped with such a valve thus has an additional safety function that can reliably prevent the drying agent arranged in the air drying element from coming into contact with the coolant.

The liquid-permeable receptacle formed on the connecting plate can generally be formed in one piece with the connecting plate or it can be formed as a separate component that can be connected to the connecting plate.

The ball interacting with the aperture can be made of an elastomeric material and thus be elastically deformable to a certain extent. This allows the ball to optimally seal the aperture.

According to one embodiment of the invention, the housing of the air drying element may be cylindrical in shape. A diameter d of the housing (4) may be greater than a height h of the housing (4) multiplied by 2. In other words, the diameter of the housing is significantly greater than its height. It therefore has a large effective surface area for dehumidification with a compact height dimension at the same time, which means that drying can take place in a particularly efficient manner. It thus differs from the housings of drying elements known from the prior art, which are often rod-shaped with a small base area and large height.

In an advantageous manner, the venting element and the air drying element respectively may include connecting means configured to detachably connect the venting element to the air drying element. For example, the venting element may be detachably connected to the air drying element via a bayonet connection. Alternatively or additionally, corresponding latching means can be provided on the venting element and on the air drying element, via which the venting element and the air drying element can be latched together.

The connecting means of the venting element may be configured such that the venting element cannot be attached to the coolant reservoir independently of the air drying element. In other words, the connecting means on the venting element can be designed in such a way that the venting element cannot be connected directly to the coolant reservoir or the connecting plate, but can only be attached to the coolant reservoir in combination with the air drying element. This ensures that air laden with moisture cannot inadvertently enter the coolant reservoir due to incorrect installation of the venting element without the inclusion of the air drying element. Due to the special design of the connecting means, it is therefore necessary to insert the air drying element between the coolant reservoir and the venting element in order to be able to attach the venting element to the coolant reservoir.

According to one embodiment, the venting and drying unit may further include a sealing element arranged between the venting element and the air drying element. This ensures that the ambient air flowing into the venting element enters completely through the air inlet of the housing of the air drying element. The sealing element can be designed as a sealing ring, for example.

Preferably, the air drying element may be replaceable. In other words, as soon as the drying agent contained in the housing can no longer fulfil its function to a sufficient extent, the air drying element can be removed from the venting and drying unit and replaced by a new but identical air drying element. The modular design of the venting and drying unit allows for quick and easy replacement by simply removing the venting cap by loosening the bayonet and/or snap-in connection and replacing the air drying element. The venting cap is then mounted again and connected to the newly inserted air drying element.

The invention also relates to an immersion-cooled battery system including the venting and drying unit according to one of claims 1 to 9, and the coolant reservoir on which the venting and drying unit is attachable, the coolant reservoir including a battery housing in which battery cells are arranged and a coolant flows around the battery cells. The venting and drying unit can be attached directly to the battery housing in which the coolant flows around the battery cells, the venting and drying unit being always arranged above the coolant surface. Alternatively, it can also be attached to a partial volume of the battery system connected to the battery housing via a fluid connection. Such a partial volume is also considered part of the coolant reservoir due to the existing fluid connection.

The venting and drying unit according to the invention can significantly improve the functionality of an immersion-cooled battery system by enabling the necessary pressure compensation between the battery system and the environment and at the same time immediately and essentially completely removing moisture introduced by the ambient air, so that no moisture is introduced into the coolant from outside.

### Brief Description of Drawings

In the following, the invention is explained in more detail with reference to the attached drawings.
Figure 1 is a schematic representation a venting and drying unit according to the invention, attached to a coolant reservoir.
Figure 2 is a schematic representation a venting and drying unit according to the invention, attached to a coolant reservoir.
Figure 3 is an exploded view of an embodiment of the venting and drying unit according to the invention.
Figure 4 is a sectional view of the venting and drying unit from Figure 3.
Figure 5 is an exploded view of the air drying element from Figure 3.
Figure 6 is an exploded view of a further embodiment of the venting and drying unit according to the invention.

### Description of Embodiments

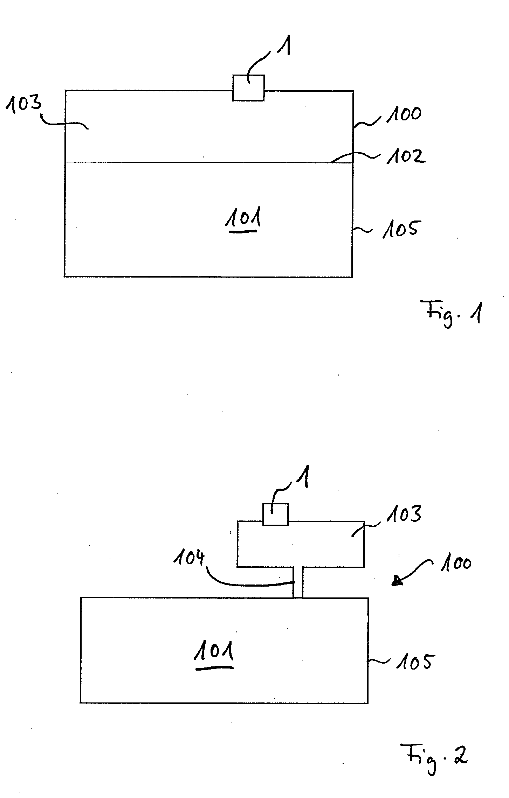

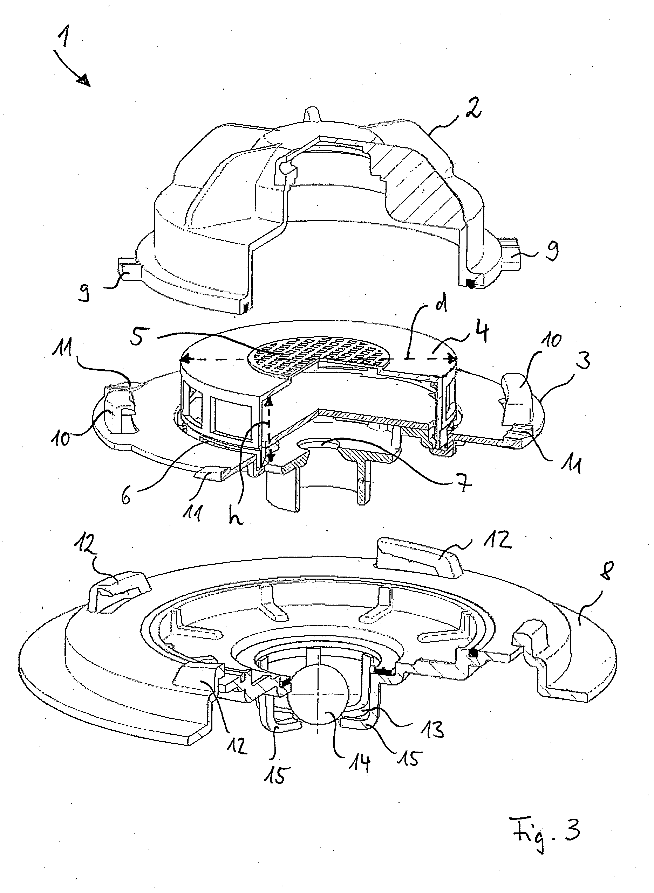

Figures 1 and 2 schematically show two alternative possibilities for the arrangement of a venting and drying unit according to the invention, designated here as a whole as 1, on a coolant reservoir 100. The coolant reservoir 100 shown in Figure 1 is a battery housing 105 filled with coolant 101. Battery cells of a battery system, which are not shown in detail in the figures, are arranged within the coolant 101, the coolant 101 flowing around the battery cells and thus cooling them by immersion. The coolant 101 has a coolant surface 102. A partial volume 103 above the coolant surface 102 is filled with air. The venting and drying unit 1 serves to equalize the pressure between the coolant reservoir 100 and the environment. In particular, air from the surroundings can flow into the coolant reservoir 100 through the venting and drying unit 1, which will be explained in more detail below in connection with Figures 3 to 6.

Figure 2 shows an alternative arrangement of the venting and drying unit 1 on a coolant reservoir 100. The coolant reservoir 100 shown here includes a battery housing 105 which is essentially completely filled with coolant 101 as well as a separate, air-filled partial volume 103 arranged above it. Battery cells of a battery system, which are not shown in more detail, are arranged within the coolant 101, the coolant 101 flowing around the battery cells and thus cooling them by immersion. There is a fluid connection 104 between the battery housing 105 containing the coolant 101 and the air-filled partial volume 103. The venting and drying unit 1 is not arranged directly on the battery housing 105, as shown in Figure 1, but on the separate, air-filled partial volume 103.

The venting and drying unit 1 is now explained in more detail with reference to Figures 3 to 6.

The venting and drying unit 1 includes a venting element 2, which is designed as a venting cap and via which an air exchange between the coolant reservoir 100, which is not shown in Figure 3, and the environment is possible for the purpose of pressure compensation. For this purpose, the venting element 2 has openings in its cap wall that are not visible in Figures 3 to 6, through which air can flow in from the outside or escape to the outside from the interior of the venting cap. These openings can, for example, be closed by spring-loaded valves in such a way that the openings are only released when the pressure exceeds or falls below predetermined threshold values.

The venting and drying unit 1 also includes an air drying element 3, which includes a housing 4 in which a drying agent not shown in the figures is arranged. The housing 4 has an air inlet 5, designed here as a perforated plate, through which air that has entered the venting and drying unit 1 from outside through the venting element 2 can flow into the housing 4. in the housing 4, the incoming air is dehumidified by the moisture contained in the air being absorbed by the drying agent arranged in the housing 4. The air dehumidified in this way exits the housing 4 again through an air outlet 6 formed on the housing 4 and enters the coolant reservoir 100 through an aperture 7 formed in the air drying element 3.

The housing 4 of the air drying element 3 is cylindrical in shape and is characterized by the fact that the diameter d of the housing 4 is significantly larger than its height h. In the embodiment shown, the diameter d is approximately 3,5 times the height h. This means that the housing 4 has a large cross-sectional area and therefore a large effective area for dehumidification with a compact height dimension, which means that the incoming air can be dried in a particularly efficient manner.

The venting element 2 is designed for detachable connection to the air drying element 3, wherein the venting element 2 covers the housing 4 of the air drying element 3 in the position of use. In other words, the venting element 2 and the air drying element 3 form a unit in the position of use, with the housing 4 of the air drying element 3 being accommodated inside the venting element 2, which is designed as a venting cap. In this way, air flowing in from the outside through the venting element 2 inevitably enters the housing 4 through the air inlet 5 and is dehumidified there in the manner described above before the air enters the coolant reservoir 100 through the aperture 7.

The venting and drying unit 1 shown in Figure 3 also has a separate connecting plate 8, via which the unit including venting element 2 and air drying element 3 can be detachably connected to the coolant reservoir 100. Both the connection between the venting element 2 and the air drying element 3 and the connection of the air drying element 3 to the connecting plate 8 is designed as a bayonet connection. For this purpose, latching lugs 9 are provided on the venting element 2, which can be inserted into corresponding receptacles 10 on the air drying element 3 by means of a rotary movement and can be latched to these. Similarly, the air drying element 3 has latching lugs 11 which can be inserted into corresponding receptacles 12 on the connecting plate 8 by means of a rotary movement and can be latched to these.

In this way, the individual components of the venting and drying unit 1 can be easily connected to each other to form a unit, while at the same time individual or several components can be removed by loosening the individual bayonet connections. In particular, the air drying element 3 can be easily removed after removing the venting element 2. This is advantageous because the air drying element 3 is preferably designed as a replacement part. To ensure that the air drying element 3 functions reliably, it is necessary to replace the drying agent from time to time, at the latest when it shows signs of saturation. In this case, the air drying element 3 designed as a replacement part can be removed as a whole from the venting and drying unit 1 and replaced with a new, identical air drying element 3. Both the connecting plate 8 and the venting element 2 can continue to be used.

At the same time, the connecting means (9, 10, 11, 12) on the individual components are designed in such a way that the venting element 2 cannot be attached to the connecting plate 8 without the air drying element 3 being placed in between. This prevents the venting element 2 from being inadvertently connected directly to the connecting plate 8 and thus to the coolant reservoir 100 and prevents moisture-laden air from flowing immediately into the coolant reservoir 100. The special and coordinated design of the connecting means (9, 10, 11, 12) on the individual components thus provides an additional protective function.

The connecting plate 8 is connected to the coolant reservoir 100 in a manner known per se and not described in detail here.

The venting and drying unit 1 also includes a valve, by means of which the air drying element 3 can be sealed off from the coolant reservoir 100 when a predetermined coolant level is exceeded. For this purpose, a ball 14 acting as a float is arranged in a liquid-permeable receptacle 13 formed on the connecting plate'8, through which the aperture 7 in the air drying element 3 can be sealed. The receptacle 13 is basket-shaped and bounded by bars 15. As soon as the coolant level in the coolant reservoir 100 rises, for example due to a temperature-dependent expansion of the coolant 101, such that coolant 101 enters the receptacle 13 through the bars 15, the ball 14 floats on the coolant surface 102 and is lifted by it until it is pressed against the aperture 7 in the air drying element 3, which acts as a valve seat, and seals it. This prevents coolant 101 from entering the housing 4 of the air drying element 3 and coming into contact with the drying agent. When the coolant level drops, the ball 14 also sinks and releases the aperture 7 again.

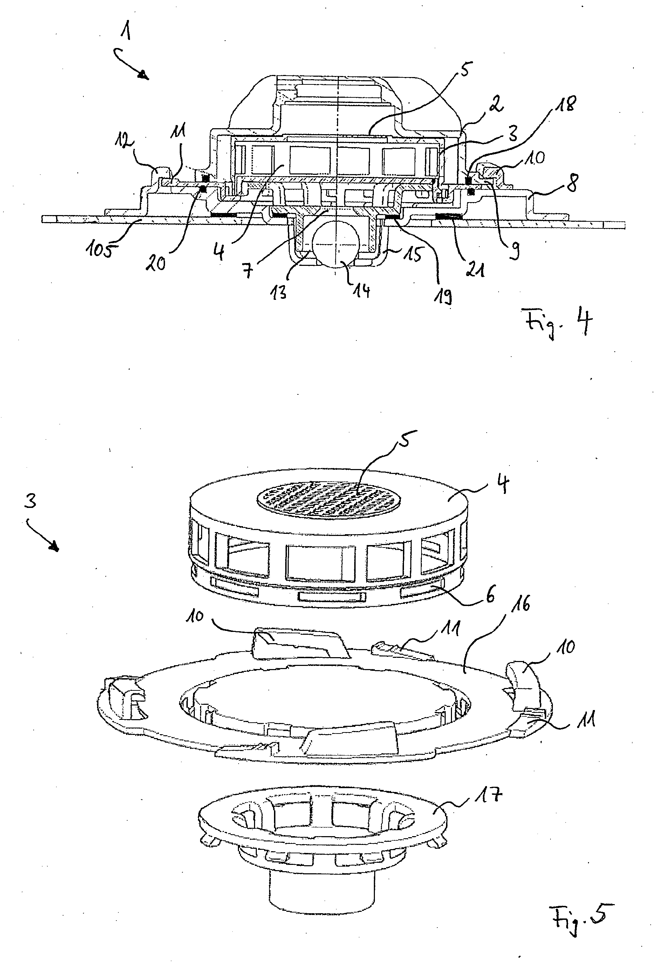

Figure 4 shows a sectional view of the venting and drying unit 1 consisting of the venting element 2, the air drying element 3 and the connecting plate 8, which are detachably connected to each other to form the unit 1. It is attached to a battery housing 105, of which only part of the wall is shown. Figure 4 clearly shows the compact structure of the venting and drying unit 1 in the position of use. In particular, it is easy to recognize that the housing 4 is covered by the venting element 2, which is designed as a venting cap, so that air flowing into the venting element 2 from the outside inevitably enters the housing 4 and is dehumidified there before it enters the battery housing 105 via the aperture 7 and gaps between the bars 15.

Figure 5 shows the air drying element 3 in an exploded view. For its part, the air drying element 3 has a modular structure consisting of the housing 4, a mounting plate 16, which in particular carries the receptacles 10 and latching lugs 11 for forming the bayonet connections between the air drying element 3 and the venting element 2 as well as the connecting plate 8, and a sleeve element 17 in which the aperture 7, which can be sealed by the ball 14 but cannot be seen in Figure 5, is formed. The sleeve element 17 extends into the receptacle 13 formed on the connecting plate 8 when the venting and drying unit 1 is in the position of use. The housing 4, the mounting plate 16 and the sleeve element 17 can be connected to each other by means of snap-in connections to form the air drying element 3.

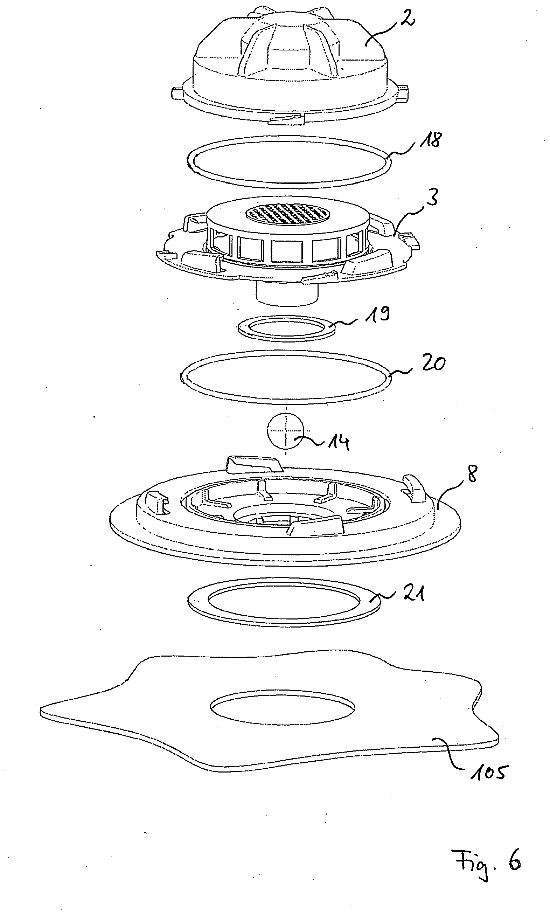

Similar to Figure 3, Figure 6 shows the structure of the venting and drying unit 1 in an exploded view, whereby sealing elements 18, 19, 20, 21 are also shown, which are arranged between the components already explained. Specifically, a sealing element 18 is arranged between the venting element 2 and the air drying element 3, a sealing element 19 and a sealing element 20 are arranged between the air drying element 3 and the connecting plate 8, and a sealing element 21 is arranged between the connecting plate 8 and the wall of the battery housing 105. The arrangement of the sealing elements 18, 19, 20, 21 in the position of use of the venting and drying unit 1 can also be seen in the sectional view of Figure 4.

### Reference Signs List

| | |
|---|---|
| Venting and drying unit | 1 |
| Venting element | 2 |
| Air drying element | 3 |
| Housing | 4 |
| Air inlet | 5 |
| Air outlet | 6 |
| Aperture | 7 |
| Connecting plate | 8 |
| Latching lug | 9 |
| Receptacle | 10 |
| Latching lug | 11 |
| Receptacle | 12 |
| Receptacle | 13 |
| Ball | 14 |
| Bar | 15 |
| Mounting plate | 16 |
| Sleeve element | 17 |
| Sealing element | 18 |
| Sealing element | 19 |
| Sealing element | 20 |
| Sealing element | 21 |
| Coolant reservoir | 100 |
| Coolant | 101 |
| Coolant surface | 102 |
| Partial volume | 103 |
| Fluid connection | 104 |
| Battery housing | 105 |

## Claims

1. A venting and drying unit (1) for attachment to a coolant reservoir (100), the venting and drying unit (1) comprising:
a venting element (2) configured to provide an air exchange between the coolant reservoir (100) and an environment for pressure compensation; and
an air drying element (3) comprising a housing (4) in which a drying agent is arranged, the housing (4) comprising an air inlet (5), an air outlet (6), and an aperture (7),
wherein the venting element (2) is further configured to:
detachably connect to the air drying element (3);
cover the housing (4) of the air drying element (3); and
allow ambient air to flow in from outside through the venting element (2) into the housing (4) of the air drying element (3) through the air inlet (5) so that the ambient air is dehumidified by the drying agent, and
wherein air drying element (3) is configured to allow the dehumidified ambient air to exit the housing (4) through the air outlet (6) into the coolant reservoir (100) through the aperture (7).

2. The venting and drying unit (1) according to claim 1, further comprising a connecting plate (8) configured to connect to the coolant reservoir (100), and to detachably connect to the venting element (2) and the air drying element (3).

3. . The venting and drying unit (1) according to claim 2, further comprising a valve configured to seal off the air drying element (3) from the coolant reservoir (100) when a predetermined coolant filling level is exceeded, the valve comprising a liquid-permeable receptacle (13) formed on the connecting plate (8), and a ball (14) arranged in the liquid-permeable receptacle (13) and configured to act as a float to seal off the aperture (7) in the air drying element (3) when the predetermined coolant filling level is exceeded.

4. The venting and drying unit (1) according to one of claims 1 to 3, wherein the housing (4) of the air drying element (3) is cylindrical in shape, and
wherein a diameter d of the housing (4) is greater than a height h of the housing (4) multiplied by 2.

5. The venting and drying unit (1) according to one of claims 1 to 4, wherein the venting element (2) and the air drying element (3) respectively comprise connecting means (9, 10) configured to detachably connect the venting element (2) to the air drying element (3).

6. The venting and drying unit (1) according to claim 5, wherein the venting element (2) is detachably connected to the air drying element (3) via a bayonet connection.

7. The venting and drying unit (1) according to one of claims 5 or 6, wherein the connecting means (9) of the venting element (2) are configured such that the venting element (2) cannot be attached to the coolant reservoir (100) independently of the air drying element (3).

8. The venting and drying unit (1) according to one of claims 1 to 7, further comprising a sealing element (18) arranged between the venting element (2) and the air drying element (3).

9. The venting and drying unit (1) according to one of claims 1 to 8, wherein the air drying element (3) is replaceable.

10. An immersion-cooled battery system comprising:
the venting and drying unit (1) according to one of claims 1 to 9; and
the coolant reservoir (100) on which the venting and drying unit (1) is attachable, the coolant reservoir (100) comprising a battery housing (105) in which battery cells are arranged and a coolant (101) flows around the battery cells.
